# EUROPEAN PATENT APPLICATION

(11) **EP 3 053 728 A1**
(43) Date of publication of application: **10.08.2016**
(21) Application number: 14850370.9
(22) Date of filing: 25.09.2014
(51) Int. Cl.: B29C 67/00

(54) **THREE-DIMENSIONAL SHAPING DEVICE AND METHOD FOR FORMING THREE-DIMENSIONAL SHAPING DEVICE**

(30) Priority: 04.10.2013 JP 2013209164
(71) Applicant: Mimaki Engineering Co., Ltd., Tomi-City, Nagano 389-0512 (JP)
(72) Inventor: KOBAYASHI, Hisayuki, Tomi-city Nagano 389-0512 (JP)
(74) Representative: Horn Kleimann Waitzhofer Patentanwälte PartG mbB
(86) International application number: PCT/JP2014/075458
(87) International publication number: WO 2015/050033

(57) **Abstract**

To form objects corresponding to various applications. As a means for solving the problems, a controls section (40) is provided. On the basis of shape data for each layer of a forming object, the control section computes, for each layer, a forming-material deposition area where a forming material that forms the object is deposited, a support-material deposition area where the forming material that forms a support is deposited as a support material, and a releasing-agent deposition area where a releasing agent is deposited between the forming-material deposition area and the support-material deposition area. The control section scans a head (10) by the control of a driving section (21). When the forming-material dispensing section (11) reaches a dispensing position for the forming material, which is directed at the forming-material deposition area or the support-material deposition area, the control section causes the forming-material dispensing section to dispense this forming material, and when the releasing-agent dispensing section (12) reaches a dispensing position for the releasing-agent, which is directed at the releasing-agent deposition area, the control section causes the releasing-agent dispensing section to dispense this releasing agent, thus dispensing the forming material and releasing agent for each layer, from lowermost to upper most.

## Description

### TECHNICAL FIELD

The present invention relates to a three-dimensional-object forming apparatus and a three-dimensional-object forming method that form a three-dimensional object by stacking layers of dispensed forming material.

### BACKGROUND ART

Conventionally, a three-dimensional-object forming apparatus and three-dimensional-object forming method of this type are known. For example, the three-dimensional-object forming apparatuses described in Patent Literatures 1 and 2 described below divide three-dimensional data for a forming object into a plurality of layers, and sequentially arranging, from the lowermost layer, layers of a forming material dispensed from a dispensing section, thereby forming an object matching the three-dimensional data. These three-dimensional-object forming apparatuses have a head of inkjet type, which dispenses ink as a forming material. The three-dimensional-object forming apparatuses in Patent Literatures 1 and 2 use ultraviolet curable ink as a forming material, and cure the ultraviolet curable ink by emitting ultraviolet from a curing section to the ultraviolet curable ink emitted and deposited. Additionally, the three-dimensional-object forming apparatus in Patent Literature 2 supports an overhanging portion and/or isolated portion of an object being formed, and also has a dispensing section for material for a support (support material) that is removed after the formation of the object is completed. In the three-dimensional-object forming apparatus in Patent Literature 2, in the step of dispensing a forming material for each layer, a support material for the same layer as this forming material is also dispensed, and the support material is cured together with the forming material by the curing section, thereby stacking layers.

### CITATION LIST

### PATENT LITERATURES

Patent Literature 1: JP 4420685 B1
Patent Literature 2: JP 2013-067036 A

### SUMMARY

### TECHNICAL PROBLEMS

Conventionally, after the formation of an object is completed, the cured support material is immersed in a specific liquid such as water, thereby removing the support material. For this reason, conventional three-dimensional-object forming apparatuses require a forming material that is not soluble in such a liquid and a support material that is soluble in such a liquid. Consequently, the selection of a forming material (i.e., a material for a forming object) is narrowed and hence the selection of the hardness of the forming object may also be narrowed. Therefore, conventional three-dimensional-object forming apparatuses may not be able to form an object for a required application. Conversely, when the support is formed from, for such a reason, the same forming material as the forming object, the forming object and the support are, for example, fixed to each other, with the result that it may be difficult to separate them.

Accordingly, a first object of the present invention is to provide a three-dimensional-object forming apparatus and three-dimensional-object forming method that remove the inconvenience of such conventional examples and that enable the formation of objects corresponding to various applications. Additionally, a second object of the present invention is to provide a three-dimensional-object forming apparatus and a three-dimensional-object forming method that remove the inconvenience of such conventional examples and that enable easy separation of a forming object and a support from each other.

### SOLUTIONS TO PROBLEMS

In order to achieve the foregoing object, a three-dimensional-object forming apparatus according to the present invention comprises: a forming-material dispensing section that dispenses a forming material toward a work surface of a stage; a releasing-agent dispensing section that dispenses a releasing agent toward the work surface, and the releasing agent is for facilitating separation of a forming object in three-dimensional and a support which supports the forming object; a driving section that makes the forming-material dispensing section and the releasing-agent dispensing section scan in parallel with at least of the work surface; and a control section that divides a three-dimensional data of the forming object into a plurality of layers and controls the forming-material dispensing section, the releasing-agent dispensing section, and the driving section on the basis of shape data for each layer of the forming object. On the basis of the shape data, the control section computes, for each layer, a forming-material deposition area where the forming material that forms the forming object is deposited, a support-material deposition area where the forming material that forms the support is deposited as a support material, and a releasing-agent deposition area where the releasing agent is deposited between the forming-material deposition area and the support-material deposition area. The control section controls the driving section such that when the forming-material dispensing section reaches a dispensing position for the forming-material, which is directed at the forming-material deposition area or the support-material deposition area, the control section causes the forming-material dispensing section to dispense the forming material, and when the releasing-agent dispensing section reaches a dispensing position for the releasing-agent, which is directed at the releasing-agent deposition area, the control section causes the releasing-agent dispensing section to dispense the releasing agent, thus dispensing the forming material and the releasing agent for each layer, from a lowermost layer to an uppermost layer.

According to this three-dimensional-object forming apparatus, the same material (forming material) can be used for the forming object and the support. According to this three-dimensional-object forming apparatus, since the releasing material is interposed between the forming object and the support, the forming object can easily be detached from the support. Additionally, according to this three-dimensional-object forming apparatus, since the releasing agent is dispensed in the same step of dispensing the forming material in each layer, a releasing part resulting from stacking layers of the releasing agent can easily be formed at a low cost.

Here, a plurality of forming-material dispensing sections are provided to dispense the forming materials of different properties toward the work surface separately. On the basis of the three-dimensional data for the forming object and property data for each portion of the forming object, the control section computes, for each layer, the respective forming-material deposition areas where the forming materials of a plurality of types that form the forming object are separately deposited. The control section controls the driving section such that when one of the forming-material dispensing sections reaches the dispensing position for the corresponding forming material, which is directed at at least one of the forming-material deposition areas for the forming materials, the control section causes the forming-material dispensing section to dispense the forming material; when another one of the forming-material dispensing sections reaches the dispensing position for the corresponding forming material, which is directed at the support-material deposition area, the control section causes the forming-material dispensing section to dispense the forming material; and when the releasing-agent dispensing section reaches a dispensing position for the releasing-agent, which is directed at the releasing-agent deposition area, the control section causes the releasing-agent dispensing section to dispense this releasing agent, thus dispensing the forming materials and the releasing agent for each layer, from a lowermost layer to an uppermost layer.

According to this three-dimensional-object forming apparatus, the three-dimensional object having a plurality of portions of different hardnesses can be formed with productivity equal to that of the three-dimensional object of single hardness.

Additionally, it is preferable that the forming material is an ultraviolet curable ink which is cured by being irradiated with an ultraviolet ray, and that a curing section be provided to emit the ultraviolet ray to the forming material which is deposited.

According to this three-dimensional-object forming apparatus, the forming material can quickly be cured with the ultraviolet ray and, therefore, the time required to form a forming object can be shortened.

It is preferable that the control section compute, for the corresponding layers, the support-material deposition areas into which the support is able to be divided and, it is also preferable that, in order to interpose the releasing agent between compositional members for the support which is divided, a space between the adjacent compositional members be used as the releasing-agent deposition area in each layer.

According to this three-dimensional-object forming apparatus, the separation of the forming object and the support is further facilitated.

It is preferable to provide a head of inkjet type that has the forming-material dispensing section(s) and the releasing-agent dispensing section.

According to this three-dimensional-object forming apparatus, the forming object can be formed at a low cost.

Additionally, in order to achieve the foregoing object, a three-dimensional-object forming method comprises: a step of dividing a three-dimensional data of an forming object into a plurality of layers and computing shape data for each layer of the forming object; and a step of computing, for each layer on the basis of the shape data, a forming-material deposition area where a forming material that forms the forming object is deposited, a support-material deposition area where the forming material that forms a support for supporting the forming object is deposited as a support material, and a releasing-agent deposition area where a releasing agent for facilitating separation of the forming object and the support is deposited between the forming-material deposition area and the support-material deposition area. The three-dimensional-object forming method further comprises: a step of scanning a forming-material dispensing section that dispenses the forming material toward a work surface of a stage and a releasing-agent dispensing section that dispenses the releasing agent toward the work surface, in parallel with the work surface, causing the forming-material dispensing section to dispense the forming material when the forming-material dispensing section reaches a dispensing position for the forming material, which is directed at the forming-material deposition area or the support-material deposition area, and causing the releasing-agent dispensing section to dispense the releasing agent when the releasing-agent dispensing section reaches a dispensing position for the releasing-agent, which is directed at the releasing-agent deposition area, this step being carried out for each layer, from a lowermost layer to an uppermost layer.

According to the three-dimensional-object forming method, the same material (forming material) can be used for the forming object and the support. Additionally, in this three-dimensional-object forming method, since the releasing material is interposed between the forming object and the support, the forming object can easily be detached from the support. Additionally, in this three-dimensional-object forming method, since the releasing agent is dispensed in the same step of dispensing the forming material in each layer, the releasing part resulting from stacking layers of the releasing agent can easily be formed at a low cost.

Here, a plurality of forming-material dispensing sections that dispense the forming materials of different properties toward the work surface separately are provided. In this case, when the forming-material deposition areas are computed, the respective forming-material deposition areas where the forming materials of a plurality of types that form the forming object are separately deposited are computed for each layer on the basis of the three-dimensional data for the forming object and property data for each portion of the forming object. In the step of dispensing the corresponding forming material and the releasing agent for each layer, the forming-material dispensing section and the releasing-agent dispensing section are scanned in parallel with the work surface. When one of the forming-material dispensing sections reaches the dispensing position for the corresponding forming material, which is directed at at least one of the forming-material deposition areas for the corresponding forming materials, the forming-material dispensing section is caused to dispense the forming material; when another one of the forming-material dispensing sections reaches the dispensing position for the corresponding forming material, which is directed at the support-material deposition area, the forming-material dispensing section is caused to dispense this forming material; and when the releasing-agent dispensing section reaches a dispensing position for the releasing-agent, which is directed at the releasing-agent deposition area, the releasing-agent dispensing section is caused to dispense the releasing agent.

According to this three-dimensional-object forming method, the three-dimensional object having the plurality of portions of different hardnesses can be formed with productivity equal to that of the three-dimensional object of single hardness.

### ADVANTAGEOUS EFFECTS OF INVENTION

In the three-dimensional-object forming apparatus and three-dimensional-object forming method, the same material can be used as the respective materials (forming materials) for an forming object and a support. Accordingly, the selection of the material is widened. Therefore, the three-dimensional-object forming apparatus and three-dimensional-object forming method can widen, for example, the selection of the hardness of an forming object. That is, in this three-dimensional-object forming apparatus and three-dimensional-object forming method, forming objects corresponding to various applications can be formed.

In this three-dimensional-object forming apparatus and three-dimensional-object forming method, since the releasing part is interposed between the forming object and the support, the forming object can easily be detached from the support. Additionally, in this three-dimensional-object forming apparatus and three-dimensional-object forming method, since the releasing agent is also dispensed in the step of dispensing the forming material in each layer, the releasing part can easily be formed at a low cost. That is, in this three-dimensional-object forming apparatus and three-dimensional-object forming method, forming objects corresponding to various applications can be formed while a decrease in the productivity of a forming object and an increase in the cost of the forming object are restricted.

### BRIEF DESCRIPTION OF DRAWINGS

FIG. 1 is a diagram of the configuration of an embodiment and a modified example 1 of a three-dimensional-object forming apparatus according to the invention.
FIG. 2 is a diagram illustrating a releasing layer on a work surface.
FIG. 3 is a diagram showing the formation of the lowermost layer of a forming object, support, and releasing part, according to the embodiment.
FIG. 4 is a sectional view of a forming object, support, and releasing part, according to the embodiment.
FIG. 5 is a perspective view of the forming object, support, and releasing part, according to the embodiment.
FIG. 6 is a top view of a forming object, support, and releasing part in a modified example 1.
FIG. 7 is a cross-sectional view of the forming object, support, and releasing part in the modified example 1, taken along A-A line in FIG. 6.
FIG. 8 is a diagram of the configuration of a modified example 2 of a three-dimensional-object forming apparatus according to the present invention.
FIG. 9 is a sectional view of a forming object, support, and releasing part in the modified example 2.

### DESCRIPTION OF EMBODIMENTS

Embodiments of a three-dimensional-object forming apparatus and a three-dimensional-object forming method will be described in detail with reference to the drawings. It is noted that this invention is not limited by the embodiments.

In the three-dimensional-object forming apparatus and the three-dimensional-object forming method, on the basis of the three-dimensional data of a forming object, the forming object is vertically divided into a plurality of layers, and layers of forming materials are arranged in series from the lowermost layer on the basis of shape data for each layer, thereby forming the object matching the three-dimensional data. The forming material is a material for forming a three-dimensional object and is cured by the emission of light or application of heat thereto.

The three-dimensional-object forming apparatus is provided with a control section that controls its various operations. The control section vertically divides the three-dimensional data of a forming object into a plurality of layers, and computes shape data for each layer of the forming object. Each of the shape data is used as a deposition area for the forming material that forms the layers of the object (hereinafter, referred to as "a forming-material deposition area").

This three-dimensional-object forming apparatus is provided with: a forming-material dispensing section that dispenses a forming material toward a work surface; and a driving section that scans the forming-material dispensing section in parallel with the work surface. The control section controls the forming-material dispensing section and driving section. When the forming-material dispensing section reaches a forming-material dispensing position directed at the forming-material deposition area, the control section dispenses this forming material. This three-dimensional-object forming apparatus dispenses the forming material in the forming-material deposition area for each layer, from the lowermost layer to the uppermost layer. By stacking layers of the forming material, a three-dimensional object is formed.

Additionally, on the basis of shape data for each layer of a forming object, the control section of this three-dimensional-object forming apparatus also computes shape data for each layer of a support that supports the forming object. The support is formed using, as a support material, the same forming material as that for a forming object. Therefore, the forming-material dispensing section dispenses a forming material for the forming object and also dispenses the forming material for the support. Each of the shape data of the support computed here is used as a deposition area for a support material (a forming material to form a support) in each layer (hereinafter referred to as a "support-material deposition area"). The control section controls the forming-material dispensing section and driving section. When the forming-material dispensing section reaches a forming-material dispensing position directed at the support-material deposition area, the control section dispenses this forming material. This three-dimensional-object forming apparatus dispenses the forming material to the support-material deposition area in the same step as dispensing the forming material to the forming-material deposition area in the same layer. Therefore, this three-dimensional-object forming apparatus dispenses the forming material in the forming-material deposition area and in the support-material deposition area for each layer, from the lowermost layer to the uppermost layer. By arranging the respective layers of the forming materials, a three-dimensional object and a support are formed.

The deposited forming material cures under predetermined conditions. For example, this three-dimensional-object forming apparatus is provided with a curing section that is able to cure the forming material. The curing section performs a curing operation under predetermined conditions. For example, this curing section is a light source, and emits a particular light, such as ultraviolet, onto the deposited forming material, thereby curing this forming material.

Here, the support is removed after the formation of an object is completed. However, since this support is formed from the same material (forming material) as the forming object, it cannot be dissolved using a liquid, such as water, as in a conventional manner. Therefore, in this three-dimensional-object forming apparatus, in order to facilitate separation between a forming object and a support, a releasing agent is interposed between them. Layers of the releasing agent are stacked, from the lowermost layer to the uppermost layer, in the same manner as in the forming material. Because of this, the three-dimensional-object forming apparatus also has a releasing-agent dispensing section that dispenses the releasing agent toward the work surface of a stage.

On the basis of shape data for each layer of a forming object, the control section of the three-dimensional-object forming apparatus also computes shape data for each layer of a releasing agent. For the computation, the shape data of each layer of the support may be used. Each of the shape data of the releasing agent is used as a deposition area for the releasing agent in each layer (hereinafter, referred to as "a releasing-agent deposition area"). The control section controls the releasing-agent dispensing section and driving section. When the releasing-agent dispensing section reaches a releasing-agent dispensing position directed at the releasing-agent deposition area, the control section dispenses this releasing agent. In the same layer, this three-dimensional-object forming apparatus dispenses the releasing-agent to the releasing-agent deposition area in the same step as dispensing the forming material to the forming-material deposition area and to the support-material deposition area. Therefore, this three-dimensional-object forming apparatus dispenses the forming material to the forming-material deposition area and to the support-material deposition area and dispenses the releasing agent to the releasing-agent deposition area, for each layer, from the lowermost layer to the uppermost layer. By arranging the respective layers of forming materials and layers of releasing agent, a three-dimensional object and a support are formed and, also, a releasing part formed from the releasing agent is interposed between this forming object and the support.

As a releasing-agent, one having the property that does not or is less likely to mix with any adjacent forming material at the time of deposition is used. Additionally, a releasing agent that has the property of being not fixed to a forming object or support is used. Furthermore, the releasing agent may or may not be promoted by the curing section. In the former case, emitting a particular light, such as ultraviolet, onto a deposited releasing agent, cures the releasing agent.

After this three-dimensional-object forming apparatus finishes all dispensing of a forming material and a releasing agent in one layer, the apparatus vertically increases the space between the forming-material dispensing section and the stage and the space between the releasing-agent dispensing section and the stage, and carries out dispensing the forming material and the releasing agent for the next layer. By repeated dispensing for each layer, from the lowermost layer to the uppermost layer, this three-dimensional-object forming apparatus forms a three-dimensional object and a support with a releasing part interposed between them.

Additionally, when at least the forming material is to be cured by a curing section, a curing operation is performed for at least the forming material deposited in that one layer. After all the curing operations in this layer are finished, the space between the forming-material dispensing section or the releasing-agent dispensing section and the stage is vertically increased, and dispensing the forming material and releasing agent for the next layer is carried out. This three-dimensional-object forming apparatus may be one that shifts to a dispensing operation for the next layer after an object to be cured cures completely (i.e., is in a completely cured state), or may be one that shifts to a dispensing operation after the object to be cured cures to a degree where the object is not deformed (i.e., is in a semi-cured state). By repeating the dispensing operation and curing operation for each layer, from the lowermost layer to the uppermost layer, this three-dimensional-object forming apparatus forms a three-dimensional object and a support with the releasing part interposed between them.

### [EXAMPLES]

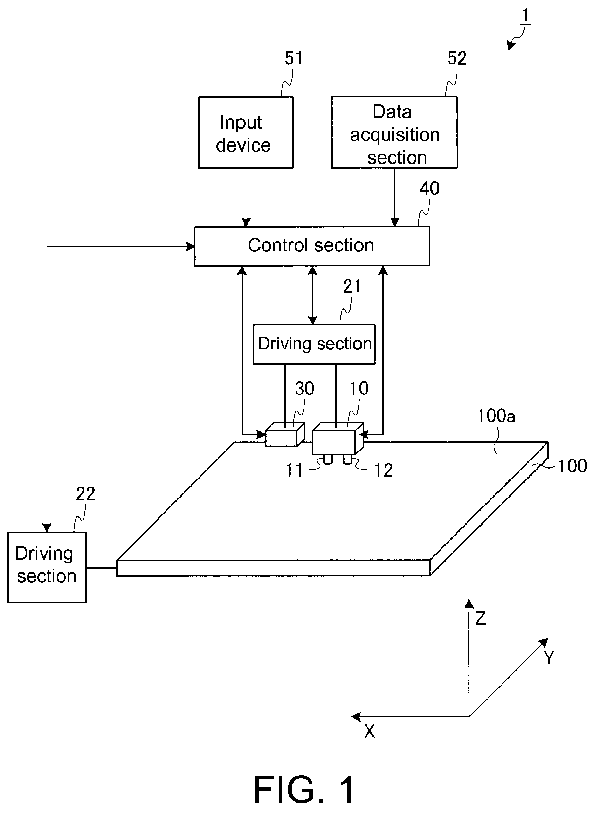

Concrete embodiments of the three-dimensional-object forming apparatus and the three-dimensional-object forming method according to the present invention will be described with reference to FIGs. 1 to 5.

The symbol 1 in FIG. 1 represents a three-dimensional-object forming apparatus according to the present embodiment. This three-dimensional-object forming apparatus 1 stacks layers of a forming material on the work surface 100a of a stage 100, thereby forming a three-dimensional object on the work surface 100a.

This three-dimensional-object forming apparatus 1 is provided with at least one head 10 that dispenses a forming material and a releasing agent. An exemplar of head 10 is of inkjet type and is able to form an object at a low cost. Specifically, this exemplar of head 10 holds the forming-material dispensing section 11 and the releasing-agent dispensing section 12, both of which are described above. In this three-dimensional-object forming apparatus 1, at least one head holding the forming-material dispensing section 11 and at least one head holding the releasing-agent dispensing section 12 may be respectively arranged.

The forming-material dispensing section 11 is a so-called nozzle that dispenses a forming material and is arranged such that its dispensing direction is oriented toward the work surface 100a of the stage 100. This forming-material dispensing section 11 is supplied with a forming material stored in a forming-material storage section (not shown). For supplying it, for example, the driving force of an electric pump is used. Additionally, the forming-material storage section may be of so-called cartridge type. As a forming material of this example, ultraviolet curable ink, which cures by exposure to ultraviolet, is used. Therefore, in this example, the forming material can quickly be cured with ultraviolet and, therefore, the time required to form an object can be shortened.

Meanwhile, the releasing-agent dispensing section 12 is a so-called nozzle that dispenses a releasing agent and is arranged such that its dispensing direction is oriented toward the work surface 100a of the stage 100. This releasing-agent dispensing section 12 is supplied with a releasing agent stored in a releasing-agent storage section (not shown). For supplying it, for example, the driving force of an electric pump is used. Additionally, the releasing-agent dispensing section may be of so-called cartridge type. As a releasing agent of this type, one that is able to prevent, for example, fixing to a forming object and to a support and prevent mixing with a forming material when deposited, is used. For example, as such a releasing agent, a high-viscosity liquid that does not mix with a deposited forming material is used. In this example, a non-curable releasing agent is used. However, as long as the property can be retained, a curable-type releasing agent such as ultraviolet curable ink may be used.

The head 10 is scanned in parallel with the work face 100a together with the forming-material dispensing section 11 and releasing-agent dispensing section 12 by the driving section 21 described above. In this example, the head 10 can be scanned in an X direction and a Y direction (forward-backward and leftward-rightward). The driving section 21 is configured of, for example, an electric motor and a set of gears.

As described above, in this example, ultraviolet curable ink is used as a forming material. Therefore, this three-dimensional-object forming apparatus 1 is provided with an above-described curing section 30 that is able to emit ultraviolet. The curing section 30 may be one that is able to emit ultraviolet to the entire work surface 100a of the stage 100 or may be one that emits ultraviolet to the deposited forming material while being scanned alone or together with the head 10. When this curing section 30 is scanned, the scanning may be carried out by the same driving section 21 as the head 10 or by a dedicated driving section. In this case, a curing section 30 that can be scanned is taken as an example.

This three-dimensional-object forming apparatus 1 is provided with the above-described control section 40 that controls the head 10 (forming-material dispensing section 11 and releasing-agent dispensing section 12), the driving section 21, and the curing section 30 independently.

The control section 40 exerts control on the basis of the three-dimensional data about a forming object. The three-dimensional data are data about the three-dimensional shape of a forming object on the work surface 100a of the stage 100. As the three-dimensional data, data input by an operator through an input device 51 may be used or data acquired by a data acquisition section 52 may be used. The input device 51 in this case refers to, for example, a CAD (Computer Aided Design) terminal or the like. Meanwhile, the data acquisition section 52 refers to a three-dimensional-shape analyzer, such as a laser device or the like, for a forming object, or for a three-dimensional object from which the forming object originates. This data acquisition section 52 analyzes the three-dimensional shape of an object or the like formed on the work surface 100a of the stage 100 or the work surface of another stage. If the size of the three-dimensional object from which the forming object originates differs from a desired size, the control section 40 is able to create, on the basis of the three-dimensional data acquired by this data acquisition section 52, three-dimensional data in which the size is changed within a range in which the object can be placed on the work surface 100a. Additionally, as the three-dimensional data for a forming object, data transmitted by communication may be used or data stored in a recording medium may be read or used.

The control section 40 divides, in a vertical direction (Z direction), the three-dimensional data of a forming object into a plurality of layers, with the work surface 100a as a reference, and computes shape data for each layer of the forming object. Additionally, on the basis of the shape data, the control section 40 computes, for each layer, the forming-material deposition area, support-material deposition area, and releasing-agent deposition area, all of which are described above.

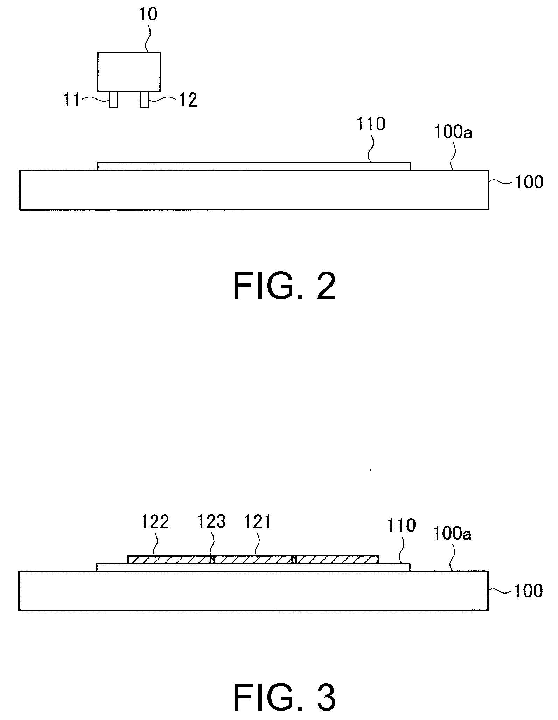

Here, in this three-dimensional-object forming apparatus 1, in order to facilitate the detachment of a forming object from the work surface 100a, a releasing agent is applied onto the work surface 100a before a forming material and so on are dispensed for the lowermost layer. The releasing agent may be applied onto the work surface 100a by an operator by hand. However, it is preferable that the releasing agent be a high-viscosity liquid that does not mix with a deposited forming material. By virtue of this, the same releasing agent as the above-described one that is interposed between the forming object and the support can be used. Therefore, before a forming material and the like for the lowermost layer are dispensed, the control section 40 of this three-dimensional-object forming apparatus 1 controls the head 10 (releasing-agent dispensing section 12) and the driving section 21, and dispenses a releasing agent toward the work surface 100a from the releasing-agent dispensing section 12, thereby forming a releasing layer 110, made of the releasing agent, on the work surface 100a (FIG. 2).

After forming the releasing layer 110, the control section 40 controls the head 10 (forming-material dispensing section 11 and releasing-agent dispensing section 12) and the driving section 21 on the basis of information about a forming-material deposition area, support-material deposition area, and releasing-agent deposition area in the lowermost layer described above, and emits the forming material or releasing agent toward the respective deposition areas while scanning the head 10. At that time, when the forming-material dispensing section 11 reaches a forming material dispensing position directed at a forming-material deposition area in the lowermost layer, this forming-material dispensing section 11 is caused to dispense a forming material, thereby depositing this forming material in the forming-material deposition area. Additionally, when the forming-material dispensing section 11 reaches a forming-material dispensing position directed at a support-material deposition area in the lowermost layer, this forming-material dispensing section 11 is caused to dispense the forming material, thereby depositing this forming material in the support-material deposition area. Additionally, when the releasing-agent dispensing section 12 reaches a releasing-agent dispensing position directed at a releasing-agent deposition area in the lowermost layer, this releasing-agent dispensing section 12 is caused to dispense a releasing agent, thereby depositing this releasing agent in the releasing-agent deposition area.

This control section 40 controls the driving section 21 and curing section 30, thereby emitting ultraviolet toward a deposited forming material while scanning the curing section 30. Thus, the control section 40 completely cures or semi-cures the forming material. Consequently, on the work surface 100a, the lowermost layer of an object being formed and a support are formed, and the lowermost layer of a releasing agent interposed between these is also formed (FIG. 3). FIG. 3 shows the lowermost layer of the object 121 being formed (described below), support 122, and releasing part 123.

Subsequently, the control section 40 controls the driving section 22, thereby lowering the-stage 100. The driving section 22 is composed of, for example, an electric motor and a gear group and moves the stage 100 in a vertical direction (Z direction). Thereafter, the control section 40 controls the head 10 (forming-material dispensing section 11 and releasing-agent dispensing section 12) and the driving section 21 on the basis of information about a forming-material deposition area, support-material deposition area, and releasing-agent deposition area in the next layer (which is one layer higher than the lowermost layer), and emits the forming material or releasing agent toward the respective deposition areas while scanning the head 10. Then, this control section 40 completely cures or semi-cures the forming material in this layer with ultraviolet while scanning the curing section 30 again. Thus, on the work surface 100a, the next layer of an object being formed and a support are formed and the next layer of the releasing agent interposed between these is also formed on the already-formed lowermost layer of an object being formed and a support.

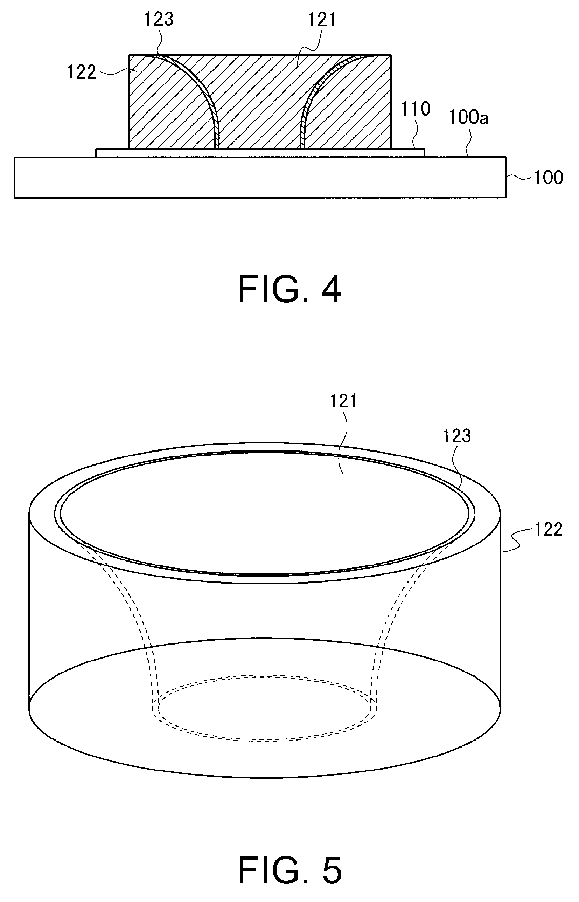

The control section 40 sequentially repeats the step of dispensing the forming material and releasing agent, the step of curing the deposited forming material, and the step of lowering the stage 100, until the uppermost layer is formed. By the repetition of these steps by this three-dimensional-object forming apparatus 1, a three-dimensional object and a support are formed on the work surface 100a. For example, this three-dimensional-object forming apparatus 1 forms an object 121 and a support 122, as shown in FIGs. 4 and 5. The forming object 121 has a flat, circular cross-section parallel to the work surface 100a and increases in cross-sectional area toward the uppermost layer from the lowermost layer. The support 122 is an annular object covering the sides of the forming object 121.

The operator takes the forming object 121 and support 122 in a conjoined state out of the three-dimensional-object forming apparatus 1. When they are taken out, it is easy to detach the forming object 121 and support 122 from the work surface 100a since the releasing layer 110 described above is interposed between the work surface 100a and the forming object 121 and support 122. Subsequently, the operator detaches the forming object 121 from the support 122. When this is detached, it is easy to separate the forming object 121 and the support 122 from each other since the releasing part 123 is interposed between the forming object 121 and the support 122.

As described above, in the three-dimensional-object forming apparatus 1 and the three-dimensional-object forming method, even if a forming object has a shape whose cross-sectional area increases as upwardly progressing from the work surface 100a, this object can be formed.

Additionally, in this three-dimensional-object forming apparatus 1 and three-dimensional-object forming method, the same material can be used as respective materials (forming materials) for a forming object and its support. Accordingly, the selection of material available is widened. Therefore, in this three-dimensional-object forming apparatus 1 and three-dimensional-object forming method, the available range of, for example, hardness of a forming object can be widened. That is, in this three-dimensional-object forming apparatus 1 and three-dimensional-object forming method, objects corresponding to various applications can be formed.

However, when the object and the support are formed from the same material, it is difficult to dissolve only the support as in a conventional manner and, therefore, the object has to be detached from the support, which has served as a forming mold, after formation of the object is completed. In this three-dimensional-object forming apparatus 1 and three-dimensional-object forming method, since the releasing part 123 is interposed between the forming object and the support, the forming object can easily be detached from the support. Additionally, in this three-dimensional-object forming apparatus 1 and three-dimensional-object forming method, since a releasing agent is also dispensed in the step of dispensing the forming material in each layer, the releasing part 123 can easily be formed at low cost. That is, in this three-dimensional-object forming apparatus 1 and three-dimensional-object forming method, objects corresponding to various applications can be formed while a decrease in the productivity of a forming object and an increase in the cost of the forming object are restricted.

### [MODIFIED EXAMPLE 1]

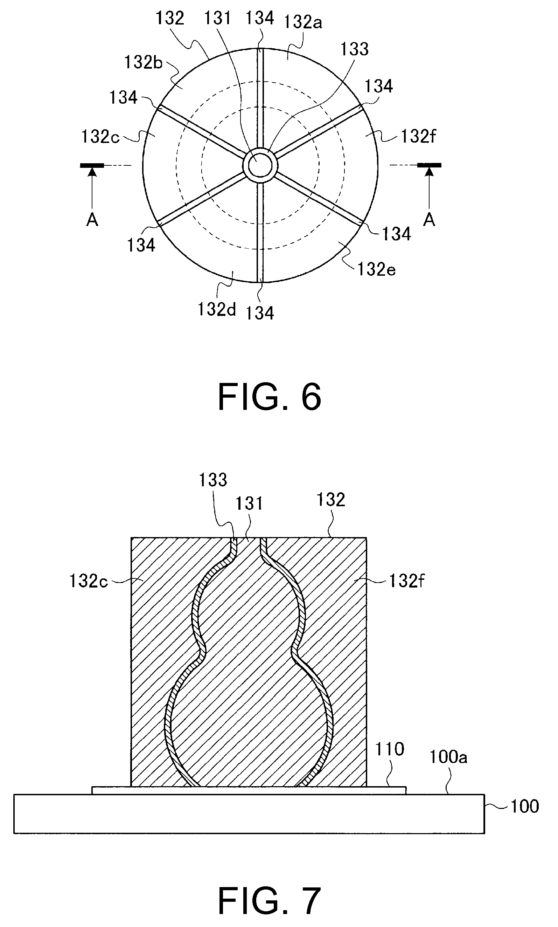

The forming object 121 taken as the example described above can be detached from the support 122 by being pushed in a vertical direction. However, in the case of a forming object 131 having a gourd shape, whose cross-section parallel to a work surface 100a changes in size in a plurality of areas in a vertical direction, as shown in FIGs. 6, 7, the forming object 131 cannot be pulled out of a support 132 covering the sides of the forming object 131. To cope with this, in a three-dimensional-object forming apparatus 1 and three-dimensional-object forming method according to the modified example, a support 132 is formed so as to be divided into a plurality of pieces.

A three-dimensional-object forming apparatus 1 according to the modified example has a configuration identical to the three-dimensional-object forming apparatus 1 according to the embodiment, and is partly modified in terms of control by the control section 40.

Specifically, when computing support-material deposition areas for each layer, a control section 40 according to the present modified example computes dividing positions for a support 132 so that a forming object 131 can easily be detached from the support 132. The dividing positions may be specified by an operator through an input device 51. On the basis of the dividing positions and shape data for each layer of an object 131 to be formed, the control section 40 computes shape data for each layer of the support 132 that can be divided. For example, to divide the support 132 in a vertical direction, each layer has shape data for at least two compositional members (in the case of the support 132 shown in FIGs. 6, 7, six compositional members 132a to 132f). Shape data for each compositional member is used for a support-material deposition area. That is, on the basis of the dividing positions described above and shape data for each layer of the object 131 to be formed, the control section 40 computes, for each layer, the support-material deposition areas into which the support 132 can be divided after completion of formation.

Additionally, in the three-dimensional-object forming apparatus 1 in the present modified example, a releasing agent is interposed between adjacent compositional members 132a to 132f, such that the support 132 can easily be divided. Because of this, on the basis of shape data for each layer of the object 131 to be formed and shape data for each layer of the compositional members 132a to 132f of the support 132, the control section 40 in the present modified example computes the area between the object 131 to be formed and the compositional members 132a to 132f, as shape data for each layer of a releasing agent, in the same manner as the embodiment above. Additionally, the control section 40 also computes the area between adjacent compositional members 132a to 132f, as shape data for each layer of the releasing agent. Each of the releasing-agent shape data is used for the releasing-agent deposition area. Specifically, on the basis of shape data for each layer of the object 131 to be formed and shape data for each layer of the compositional members 132a to 132f of the support 132, the control section 40 computes the area between the object 131 to be formed and the support 132 (compositional members 132a to 132f) as a releasing-agent deposition area in the same manner as the embodiment above. Additionally, the control section 40 also computes the area of adjacent compositional members 132a to 132f, for each layer, in order to interpose the releasing agent between the compositional members, 132a to 132f, into which the support 132 is divided.

The three-dimensional-object forming apparatus 1 in the present modified example computes a support-material deposition area and a releasing-agent deposition area described in the embodiment above, so as to perform computation corresponding to the dividing structure of such a support 132. Then, this three-dimensional-object forming apparatus 1 stacks layers of the forming material and releasing agent in the same manner as the embodiment above, thereby forming the three-dimensional object 131 and the support 132.

In the forming object 131 and support 132 in a conjoined state, a releasing part 133 formed from a releasing agent is interposed between the forming object 131 and the compositional members 132a to 132f, and releasing parts 134 formed from the releasing agent are also interposed between the adjacent compositional members 132a to 132f. By virtue of this, after an operator takes the forming object from the three-dimensional-object forming apparatus 1, he or she can easily separate the support 132, for each of the compositional members 132a to 132f, from the forming object 131.

As just described, according to the three-dimensional-object forming apparatus 1 and three-dimensional-object forming method of the present modified example, it is possible to obtain the same effect as the embodiment, as well as to easily separate a forming object from a support covering the sides of the object even if the forming object has a complicated shape whose cross-section parallel to a work surface 100a changes in size in a plurality of areas in a vertical direction. Therefore, compared to the embodiment, the three-dimensional-object forming apparatus 1 and three-dimensional-object forming method of this modified example can improve productivity.

### [MODIFIED EXAMPLE 2]

In the three-dimensional-object forming apparatuses 1 and three-dimensional-object forming methods in the embodiment and modified example 1 described above, an object is formed from a forming material of one type. However, in a case where a forming object requires properties differing according to portions, for example, hardness may be changed according to the portions. The present modified example has been proposed in view of this point.

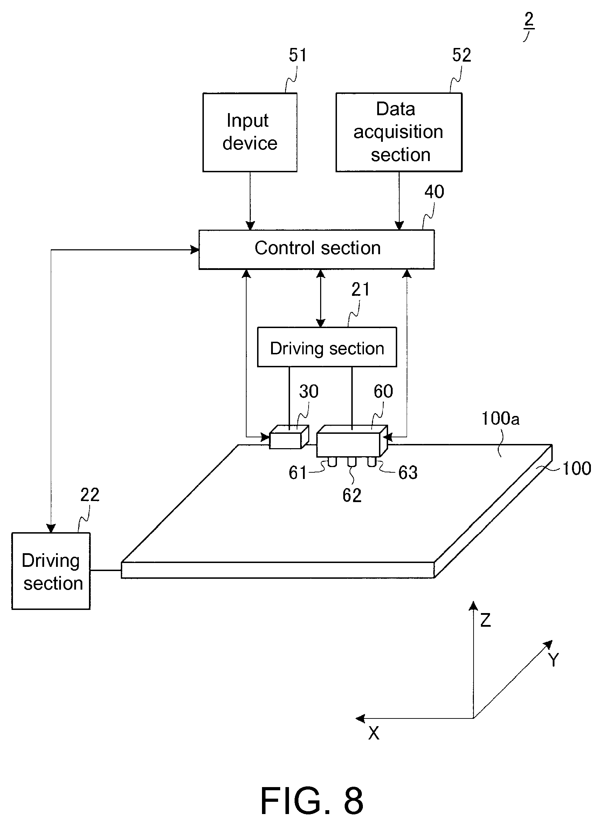

The symbol 2 in FIG. 8 represents a three-dimensional-object forming apparatus according to the present modified example. This three-dimensional-object forming apparatus 2 is obtained by replacing the head 10 of inkjet type in the three-dimensional-object forming apparatus 1 in the embodiment or modified example 1 with a head 60 of inkjet type, and also by partly modifying control by the control section 40. This three-dimensional-object forming apparatus 2 is provided with at least one head 60. The head 60 is scanned parallel to a work surface 100a by a driving section 21.

This three-dimensional-object forming apparatus 2 is provided with a plurality of forming-material dispensing sections (in FIG. 8, first and second forming-material dispensing sections 61, 62 are shown as an example) that separately dispense forming materials of different properties toward the work surface 100a. The head 60 in the present modified example holds first and second forming-material dispensing sections 61, 62 and a releasing-agent dispensing section 63. The releasing-agent dispensing section 63 is identical to the releasing-agent dispensing section 12 in the embodiment or modified example 1.

The first forming-material dispensing section 61 is a so-called nozzle that dispenses a first forming material and is arranged such that its dispensing direction is oriented toward the work surface 100a of the stage 100. The supply of the first forming material to this first forming-material dispensing section 61 is the same as the supply of forming material to the forming-material dispensing section 11 in the embodiment or modified example 1. The second forming-material dispensing section 62 is a so-called nozzle that dispenses a second forming material and is arranged such that its dispensing direction is oriented toward the work surface 100a of the-stage 100. The supply of the second forming material to this second forming-material dispensing section 62 is the same as the supply of forming material to the forming-material dispensing section 11 in the embodiment or modified example 1.

As first and second forming materials, ultraviolet curable ink, which cures by exposure to ultraviolet, is used. Meanwhile, as the first forming material in this example, one lower in hardness than the second forming material is used.

Here, the three-dimensional-object forming apparatus 2 in the present modified example is provided with a head by which a forming-material dispensing section of at least one type is held. A releasing-agent dispensing section may be held by this or another head. Specifically, in this three-dimensional-object forming apparatus 2, if the one shown in FIG. 8 is taken as an example, at least one head holding the first forming-material dispensing section 61, at least one head holding the second forming-material dispensing section 62, and at least one head holding the releasing-agent dispensing section 63 may be respectively arranged, in addition to the configuration described above. Alternatively, in this three-dimensional-object forming apparatus 2, at least one head holding the first and second forming-material dispensing sections 61, 62 and at least one head holding the releasing-agent dispensing section 63 may be arranged as to be separate. Equally alternatively, in this three-dimensional-object forming apparatus 2, at least one head holding the first forming-material dispensing section 61 and releasing-agent dispensing section 63 and at least one head holding the second forming-material dispensing section 62 and releasing-agent dispensing section 63 may be respectively arranged.

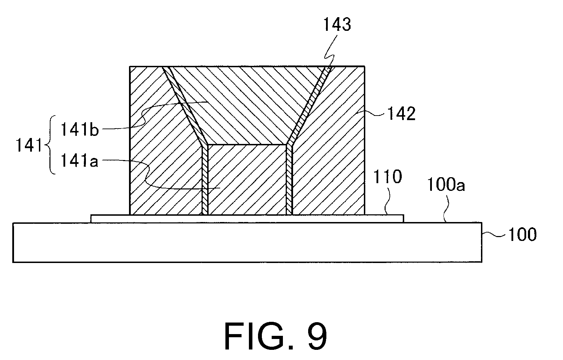

FIG. 9 shows one of concrete examples of an object 141 formed by this three-dimensional-object forming apparatus 2. The forming object 141 has a shape obtained by placing a circular truncated cone 141b on a circular cylinder solid 141a located on the work surface 100a side, the hardness of the circular truncated cone 141b being higher than that of the circular cylinder solid 141a. Therefore, in this forming object 141, the circular cylinder solid 141a is formed from the above-mentioned first forming material, and the circular truncated cone 141b is formed from the above-mentioned second forming material. Incidentally, for ease of explanation, this forming object 141 is shown in such a manner that layers change from one to another in a vertical direction, and also hardness changes from one to another. However, in the three-dimensional-object forming apparatus 2 in this present example, no matter where portions of different properties are present in a forming object (for example, even if a certain layer has a single property and another has a plurality of properties), as described below, this object can be formed.

Next, a control section 40 in the present modified example will be described.

In addition to the three-dimensional data for a forming object, the control section 40 acquires the property data for each portion of this object. For example, in the concrete example in FIG. 9, the control section 40 acquires the three-dimensional data for an object 141 to be formed which has the circular cylindrical solid 141a and a circular truncated cone 141b and also obtains the property data for the circular cylindrical solid 141a and the property data for the circular truncated cone 141b. The respective property data indicate that the hardness of the circular truncated cone 141b is higher than that of the circular cylindrical solid 141a. Specifically, the respective property data specify, for example, the corresponding materials (forming materials) for the circular cylindrical solid 141a and circular truncated cone 141b. These property data are specified from an input device 51 by an operator.

On the basis of the three-dimensional data for a forming object and the property data for each portion, the control section 40 computes, for each layer, respective forming-material deposition areas where corresponding forming materials of a plurality of types for forming this object are separately deposited. Specifically, this control section 40 acquires the three-dimensional data for a forming object and the property data for each portion and then, for example, assigns the property data for each portion to the three-dimensional data, thereby creating three-dimensional data that can be identified for each layer. Then, the control section 40 divides the three-dimensional data into a plurality of layers in a vertical direction, and computes shape data for each layer which can be identified for each portion of the forming object. For example, in the concrete example in FIG. 9, with the respective shape data, a portion where the circular cylindrical solid 141a is present is computed as a first forming-material deposition area (hereinafter, referred to as "first forming-material deposition area"), and a portion where the circular truncated cone 141b is present is computed as a second forming-material deposition area (hereinafter, referred to as "second forming-material deposition area."

Alternatively, a forming-material deposition area for each of the forming materials may be computed in the following manner. First, as in the embodiment or modified example 1, the control section 40 divides the three-dimensional data of a forming object t into a plurality of layers, and computes shape data for each layer of the forming object. Then, the control section 40 collates the positional information of the shape data and the positional information of the portion having the property data, and assigns the property data for each corresponding portion to each of the shape data, thereby computing shape data for each layer that can be identified for each portion of the forming object.

In the present modified example, a support-material deposition area and a releasing-agent deposition area are computed in the same manner as in the embodiment above or modified example 1.

After the control section 40 computes the support-material deposition area and the releasing-agent deposition area, it forms a releasing layer 110 on the work surface 100a, and stacks layers of the forming materials (i.e., first and second forming materials) and layers of the releasing agent, from lowermost to uppermost. After the releasing layer 110 is formed, this control section 40 dispenses the forming material when the forming-material dispensing section reaches a forming-material dispensing position directed at at least one of the forming-material deposition areas for the corresponding forming materials in the lowermost layer; dispenses the forming material when the forming-material dispensing section reaches a forming-material dispensing position directed at a support-material deposition area in the lowermost layer; and also dispenses the releasing agent when the releasing-agent dispensing section reaches a releasing-agent dispensing position directed at a releasing-agent deposition area in the lowermost layer. Referring to FIG. 9 as the concrete example, after forming the releasing layer 110, the control section 40 controls the head 60 (i.e., the first forming-material dispensing section 61, second forming-material dispensing section 62, and releasing-agent dispensing section 63) and the driving section 21 on the basis of information about one of the first and second forming-material deposition areas, the support-material deposition area, and the releasing-agent deposition area in the lowermost layer, and dispenses the forming material or releasing agent toward the respective deposition areas while scanning the head 60. At that time, when the first forming-material dispensing section 61 reaches a first forming- material dispensing position directed at the first forming-material deposition area in the lowermost layer, the first forming material is dispensed from the first forming-material dispensing section 61 and deposited in the first forming-material deposition area.

In a support-material deposition area and a releasing-agent deposition area, the forming materials and the releasing agent are dispensed in corresponding layers in the same manner as in the embodiment above or modified example 1. Here, a forming material to be deposited in the support-material deposition area may be the first forming material or may be the second forming material. The forming material to be used as a support material may be specified, for example, by an operator through the input device 51.

The control section 40 controls a driving section 21 and a curing section 30 after the forming material in the lowermost layer is deposited, thereby emitting ultraviolet toward the deposited forming material while scanning the curing section 30. Thus, the control section 40 completely cures or semi-cures the forming material. In the concrete example in FIG. 9, the deposited first forming material is completely cured or semi-cured by ultraviolet. Consequently, on the work surface 100a, the lowermost layer of an object being formed and support are formed and the lowermost layer of a releasing agent interposed between these is also formed.

Thereafter, the control section 40 lowers the stage 100 by using the driving section 22, controls the head 60 and the driving section 21 on the basis of information about at least one of forming-material deposition areas for the corresponding forming materials, the support-material deposition area, and the releasing-agent deposition area in the next layer (which is one layer higher than the lowermost layer), and dispenses the forming material or releasing agent toward the respective deposition areas while scanning the head 60. Then, this control section 40 completely cures or semi-cures the forming material in this layer with ultraviolet while scanning the curing section 30 again. Thus, on the work surface 100a, the next layer of an object being formed and a support is formed and the next layer of the releasing agent interposed between these is also formed on the already-formed lowermost layer of an object being formed and a support. In the concrete example in FIG. 9, while the second forming-material deposition area has not yet been formed, the next layer for the object being formed is formed from the first forming material.

The control section 40 sequentially repeats the step of dispensing the forming material and releasing agent, the step of curing the deposited forming material, and the step of lowering the stage 100, until the uppermost layer is formed. In the concrete example in FIG. 9, when layers are stacked to a certain level in the process, the first forming-material deposition areas no longer appear and, instead, the second forming-material deposition areas appear. For this reason, at that time, when the second forming-material dispensing section 62 reaches a second forming material dispensing position directed at a second forming-material deposition area, this second forming-material dispensing section 62 is caused to dispense a second forming material, thereby depositing this second forming material in the second forming-material deposition area.

In this three-dimensional-object forming apparatus 2, by repetition of these steps, a three-dimensional object having a plurality of portions of different hardnesses is formed together with the support on the work surface 100a. In the concrete example in FIG. 9, together with the object 141, the support 142 covering the object 141 from the sides, and the releasing part 143 between the object 141 and the support 142 are formed.

As just described, in the three-dimensional-object forming apparatus 2 and three-dimensional-object forming method in the present modified example, forming-material dispensing sections are provided, the number of which corresponds to the types of forming materials to be used, and the control form of the control section 40 is modified, with respect to the three-dimensional-object forming apparatus 1 and three-dimensional-object forming method in the embodiment above and modified example 1. By simply doing so, a three-dimensional object having a plurality of portions of different hardnesses can be formed with productivity equal to that of the three-dimensional object of single hardness in the embodiment above. Accordingly, this three-dimensional-object forming apparatus 2 and three-dimensional-object forming method can obtain the same effect as the three-dimensional-object forming apparatus 1 and three-dimensional-object forming method in the embodiment above and the modified example 1 and can also form a three-dimensional object having a plurality of portions of different hardnesses while suppressing a significant increase in the cost of the forming object.

### DESCRIPTION OF REFERENCE SIGNS

- 1, 2:: Three-dimensional-object forming apparatus
- 10:: Head
- 11:: Forming-material dispensing section
- 12:: Releasing-agent dispensing section
- 21, 22:: Driving section
- 30:: Curing section
- 40:: Control section
- 51:: Input device
- 52:: Data acquisition section
- 60:: Head
- 61:: First forming-material dispensing section
- 62:: Second forming-material dispensing section
- 63:: Releasing-agent dispensing section
- 100:: Stage
- 100a:: Work surface
- 110:: Releasing layer
- 121:: Forming object
- 122:: Support
- 123:: Releasing part
- 131:: Forming object
- 132:: Support
- 132a∼132f:: Compositional member
- 133,134:: Releasing part
- 141:: Forming object
- 141a:: Circular cylindrical solid
- 141b:: Circular truncated cone
- 142:: Support
- 143:: Releasing part

## Claims

1. A three-dimensional-object forming apparatus, comprising:
a forming-material dispensing section that dispenses a forming material toward a work surface of a stage;
a releasing-agent dispensing section that dispenses a releasing agent toward the work surface, and the releasing agent is for facilitating separation of a forming object in three-dimensional and a support which supports the forming object;
a driving section that makes the forming-material dispensing section and the releasing-agent dispensing section scan in parallel with at least of the work surface; and
a control section that divides a three-dimensional data of the forming object into a plurality of layers and controls the forming-material dispensing section, the releasing-agent dispensing section, and the driving section on the basis of shape data for each layer of the forming object,
wherein, on the basis of the shape data, the control section computes, for each layer, a forming-material deposition area where the forming material that forms the forming object is deposited, a support-material deposition area where the forming material that forms the support is deposited as a support material, and a releasing-agent deposition area where the releasing agent is deposited between the forming-material deposition area and the support-material deposition area, and
wherein the control section controls the driving section such that when the forming-material dispensing section reaches a dispensing position for the forming-material, which is directed at the forming-material deposition area or the support-material deposition area, the control section causes the forming-material dispensing section to dispense the forming material, and when the releasing-agent dispensing section reaches a dispensing position for the releasing-agent, which is directed at the releasing-agent deposition area, the control section causes the releasing-agent dispensing section to dispense the releasing agent, thus dispensing the forming material and the releasing agent for each layer, from a lowermost layer to an uppermost layer.

2. The three-dimensional-object forming apparatus according to claim 1, wherein
a plurality of forming-material dispensing sections are provided to dispense the forming materials of different properties toward the work surface separately,
wherein, on the basis of the three-dimensional data for the forming object and property data for each portion of the forming object, the control section computes, for each layer, the respective forming-material deposition areas where the forming materials of a plurality of types that form the forming object are separately deposited, and
wherein the control section controls the driving section such that when one of the forming-material dispensing sections reaches the dispensing position for the corresponding forming material, which is directed at at least one of the forming-material deposition areas for the forming materials, the control section causes the forming-material dispensing section to dispense the forming material, when another one of the forming-material dispensing sections reaches the dispensing position for the corresponding forming material, which is directed at the support-material deposition area, the control section causes the forming-material dispensing section to dispense the forming material, and when the releasing-agent dispensing section reaches a dispensing position for the releasing-agent, which is directed at the releasing-agent deposition area, the control section causes the releasing-agent dispensing section to dispense the releasing agent, thus dispensing the forming materials and the releasing agent for each layer, from a lowermost layer to an uppermost layer.

3. The three-dimensional-object forming apparatus according to claim 1 or 2, wherein
the forming material is an ultraviolet curable ink that is cured by being irradiated with an ultraviolet ray, and
wherein a curing section is provided to emit the ultraviolet ray to the forming material which is deposited.

4. The three-dimensional-object forming apparatus according to claim 1 or 2, wherein
the control section computes, for the corresponding layers, the support-material deposition areas into which the support is able to be divided, and
wherein, in order to interpose the releasing agent between compositional members for the support which is divided, a space between the adjacent compositional members is used as the releasing-agent deposition area in each layer.

5. The three-dimensional-object forming apparatus according to claim 1 or 2, wherein
a head of inkjet type that has the forming-material dispensing section and the releasing-agent dispensing section is provided.

6. A three-dimensional-object forming method, comprising:
a step of dividing a three-dimensional data of a forming object into a plurality of layers and computing shape data for each layer of the forming object; and
a step of computing, for each layer on the basis of the shape data, a forming-material deposition area where a forming material that forms the forming object is deposited, a support-material deposition area where the forming material that forms a support for supporting the forming object is deposited as a support material, and a releasing-agent deposition area where a releasing agent for facilitating separation of the forming object and the support is deposited between the forming-material deposition area and the support-material deposition area;
and three-dimensional-object forming method further comprising:
a step of scanning a forming-material dispensing section that dispenses the forming material toward a work surface of a stage and a releasing-agent dispensing section that dispenses the releasing agent toward the work surface, in parallel with the work surface, causing the forming-material dispensing section to dispense the forming material when the forming-material dispensing section reaches a dispensing position for the forming material, which is directed at the forming-material deposition area or the support-material deposition area, and causing the releasing-agent dispensing section to dispense the releasing agent when the releasing-agent dispensing section reaches a dispensing position for the releasing-agent, which is directed at the releasing-agent deposition area, this step being carried out for each layer, from a lowermost layer to an uppermost layer.

7. The three-dimensional-object forming method according to claim 6, wherein
a plurality of forming-material dispensing sections that dispense the forming materials of different properties toward the work surface separately are provided,
wherein when the forming-material deposition areas are computed, the respective forming-material deposition areas where the forming materials of a plurality of types that form the forming object are separately deposited are computed for each layer on the basis of the three-dimensional data for the forming object and property data for each portion of the forming object, and
wherein in the step of dispensing the corresponding forming material and the releasing agent for each layer, the forming-material dispensing section and the releasing-agent dispensing section are scanned in parallel with the work surface, wherein when one of the forming-material dispensing sections reaches the dispensing position for the corresponding forming material, which is directed at at least one of the forming-material deposition areas for the corresponding forming materials, the forming-material dispensing section is caused to dispense the forming material, when another one of the forming-material dispensing sections reaches the dispensing position for the corresponding forming material, which is directed at the support-material deposition area, the forming-material dispensing section is caused to dispense the forming material, and when the releasing-agent dispensing section reaches a dispensing position for the releasing-agent, which is directed at the releasing-agent deposition area, the releasing-agent dispensing section is caused to dispense this releasing agent.
